# EUROPÄISCHE PATENTSCHRIFT

(11) **EP 0 879 864 B1**
(45) Veröffentlichungstag und Bekanntmachung des Hinweises auf die Patenterteilung: **23.07.2003**
(21) Anmeldenummer: 98109350.3
(22) Anmeldetag: 22.05.1998
(51) Int. Cl.: C09J 157/00

(54) **Viskose Klebstoffdispersion**
Viscous adhesive dispersion
Dispersion adhésive visqueux

(30) Priorität: 23.05.1997 DE 19721691
(43) Veröffentlichungstag der Anmeldung: 25.11.1998
(73) Patentinhaber: BASF AKTIENGESELLSCHAFT, 67056 Ludwigshafen (DE)
(72) Erfinder: Wildburg, Gerald, 67071 Ludwigshafen (DE); Urban, Dieter, 67346 Speyer (DE); Langhauser, Georg, 67152 Ruppertsberg (DE); Schumacher, Karl-Heinz, 67433 Neustadt (DE); Hartz, Oliver, 68309 Mannheim (DE); Wistuba, Eckehardt, 67098 Bad Dürkheim (DE)
(74) Vertreter: Kinzebach, Werner, Dr.

(56) Entgegenhaltungen:
- EP-A- 0 110 209
- EP-A- 0 587 114
- PATENT ABSTRACTS OF JAPAN vol. 006, no. 169 (C-122), 2. September 1982 & JP 57 087403 A (AICA KOGYO CO LTD), 31. Mai 1982
- DATABASE WPI Section Ch, Week 7543 Derwent Publications Ltd., London, GB; Class A14, AN 75-71496W XP002078574 & JP 50 055648 A (KONISHI GISUKE SHOTEN KK), 15. Mai 1975

## Beschreibung

Die vorliegende Erfindung betrifft Klebstoffe, die eine wässrige Polymerdispersion enthalten, welche durch radikalische Copolymerisation in Gegenwart mindestens eines Schutzkolloids auf Basis eines Präpolymers erhältlich ist, Verfahren zu ihrer Herstellung sowie ihre Verwendung.

Zur Herstellung von Verpackungen aus Papier, Pappe oder Karton, wie z. B. Faltschachteln, sowie zum Aufbringen von Etiketten aus Papier auf nichtsaugenden Substraten, insbesondere auf Hohlkörpern aus Glas, Kunststoff oder Metall, wie z. B. Flaschen oder Gläsern, werden Klebstoffe eingesetzt, die man allgemein als "Verpackungskleber" bezeichnet. Als Verpackungskleber sind solche Systeme verbreitet, die eine Polymerdispersion oder eine Abmischung einer Polymerdispersion mit anderen klebaktiven Bestandteilen umfassen.

In Kleb- und Dichtstoffe, Jhrg. 40, 6/96, S. 22 f., werden allgemein Dispersionsklebstoffe in der Papier- und Verpackungsindustrie beschrieben. Als Monomere zur Herstellung der die klebende Substanz bildenden dispersen Phase kommen demnach z. B. Vinylacetat, Ethylen, Vinylpropionat, Acrylsäureester und Dibutylmaleinat in Betracht. Neben dem chemischen Aufbau der Polymerdispersion und insbesondere der Partikelgrößenverteilung haben Art und Menge der Emulgatoren und Schutzkolloide einen entscheidenden Einfluss auf die Klebstoffeigenschaften. Da die zur Stabilisierung der Polymerdispersion eingesetzten Komponenten in den Klebstofffilm mit eingebaut werden, beeinflussen sie somit die Eigenschaften dieses Filmes, wie z. B. dessen Wasserfestigkeit. Eine weitere wichtige Eigenschaft der resultierenden Filme, insbesondere bei einer Verwendung des Klebstoffs beim Aufbringen transparenter Etiketten, wie z. B. bedruckter Polymerfolien, ist seine Transparenz. Unterhalb einer für jede Polymerdispersion charakteristischen Temperatur, dem sogenannten Weißpunkt oder der Mindestfilmbildetemperatur, erhält man anstelle durchsichtiger, transparenter Filme weiße Schichten, wobei Folienetiketten insbesondere an den unbedruckten Stellen an Transparenz verlieren und insgesamt die visuelle Farbsättigung des Druckbildes auf dem Etikett an Tiefe und Brillanz verliert.

Für die Nassetikettierung von Flaschen werden überwiegend Klebstoffsysteme eingesetzt, die auf einer Acrylatdispersion basieren, welche entweder alleine oder in Abmischung mit hochviskosen Naturstoffen, wie z. B. Stärke oder Casein, eingesetzt wird. Nachteilig an den bekannten Verpackungsklebern auf Basis von Acrylatdispersionen ist, dass diese Dispersionen im allgemeinen Filme bilden, die eine deutliche Trübung aufweisen.

Eine wesentliche Anforderung an ein Klebstoffsystem, welches für die Etikettierung von Hohlkörpern eingesetzt wird, ist die Ausbildung eines Films mit hoher Adhäsion und niedriger Kohäsion. Zum optimalen Einsatz auf den üblichen Maschinen für die Nassetikettierung von Flaschen ist es notwendig, dass der verwendete Klebstoff eine hohe Viskosität bei niedrigen Geschwindigkeitsgefällen aufweist, wie z. B. eine Viskosität in einem Bereich von etwa 2000 bis 10000 mPa·s bei 25 s⁻¹.

Weiterhin werden besondere Anforderungen an Klebstoffe gestellt, welche zur Herstellung oder Etikettierung von Verpackungen eingesetzt werden, welche mit Lebensmitteln in Kontakt kommen. Wichtig ist dann neben den zuvor genannten Eigenschaften, die toxikologische Unbedenklichkeit des Klebstoffs und der Ausschluss von geschmacks- und geruchsbeeinträchtigenden Wirkungen. Neben den toxikologischen Aspekten hinsichtlich der zu verpackenden Lebensmittel werden weitere besondere Anforderungen an die Inhaltsstoffe der Dispersionen für den Einsatz in Verpackungsklebern in Bezug auf eine mögliche gesundheitsschädigende und/oder reizende Wirkung auf das mit der Verarbeitung betraute Personal gestellt. So ist in einigen Dispersionen, welche für die Herstellung von Klebstoffen eingesetzt werden, Butenol als Polymerisationsregler enthalten, welches toxikologisch nicht ganz unbedenklich ist.

Der vorliegenden Erfindung liegt die Aufgabe zugrunde, neue Klebstoffe zur Verfügung zu stellen, die zur Herstellung und Etikettierung von Verpackungen geeignet sind. Neben guten anwendungstechnischen Eigenschaften, wie hoher Klebrigkeit, niedriger Kohäsion und hoher Viskosität bei niedrigen Geschwindigkeitsgefällen sollen diese Klebstoffe insbesondere einen klaren, transparenten Film bilden, um die zuvor genannten Nachteile bei der Nassetikettierung mit transparenten Folien zu vermeiden. Des weiteren sollen die eingesetzten Dispersionen möglichst keine Komponenten enthalten, die als toxikologisch bedenklich gelten.

Überraschenderweise wurde nun gefunden, dass diese Aufgabe gelöst wird, wenn man in Klebstoffen eine wässrige Polymerdispersion einsetzt, die durch radikalische Copolymerisation in Gegenwart eines bestimmten Schutzkolloids auf Basis eines Präpolymers erhältlich ist.

Gegenstand der Erfindung ist daher ein Klebstoff, enthaltend:
a) 5,0 bis 95,0 Gew.-% einer Klebstoffdispersion mit einer Viskosität im Bereich von 2000 bis 10000 mPa·s, die
   a1) eine wässrige Polymerdispersion, die erhältlich ist durch radikalische wässtige Emulsions polymerisation einer Mischung M, umfassend wenigstens 50 Gew.-% mindestens eines ethylenisch ungesättigten Monomers A, ausgewählt unter den Estern der Acrylsäure mit Alkanolen mit 1 bis 12 C-Atomen, Estern der Methacrylsäure mit Alkanolen mit 1 bis 12 C-Atomen und Styrol, zu einem Polymerisat P, in Gegenwart min-destens eines Schutzkolloids auf Basis eines in situ hergestellten wasser-löslichen Präpolymers, welches wenigstens ein wasserlösliches Monomer B umfasst, das ausgewählt ist unter Acrylsäure, Methacrylsänte und Mischungen daron;
   a2) gegebenenfalls eine Base, ausgewählt unter Alkalimetallhydroxiden, Ammoniak oder flüchtigen, organischen Aminen,
   a3) gegebenenfalls ein vollständig wassermischbares, organisches Lösungsmittel,
   sowie gegebenenfalls weitere Zusatzstoffe enthält;
b) 0 bis 90,0 Gew.-% eines Polysaccharids und/oder eines Proteins und/oder eines Proteinabbauproduktes;
c) 0 bis 95,0 Gew.-% mindestens eines Füllstoffes;
d) 0 bis 10,0 Gew.-% mindestens eines Emulgators;
e) 0 bis 30,0 Gew.-% weiterer Zusätze;
f) Wasser ad 100 Gew.-%.

### componente a) : a1):

Die zur Herstellung der Polymerisate P verwendete Monomerenmischung M enthält 50 bis 100 Gew.-%, bevorzugt 60 bis 99,9 Gew.-% mindestens eines radikalisch polymerisierbaren, ethylenisch ungesättigten Monomers A (Hauptmonomer) und 0 bis 50 Gew.-%, gegebenenfalls 0,1 bis 40 Gew.-%, mindestens eines Comonomers C sowie in Abhängigkeit vom Polymerisationsverfahren ggf. wenigstens ein wasserlösliches Monomer B in den im folgenden beschriebenen Mengen.

Monomere A sind Ester der Acrylsäure oder Methacrylsäure mit Alkanolen mit 1 bis 12 Kohlenstoffatomen, bevorzugt 1 bis 8 Kohlenstoffatomen und insbesondere 1 bis 4 Kohlenstoffatomen, wie z. B. Ester der Acrylsäure und/oder Methacrylsäure mit Methanol, Ethanol, n-Propanol, Isopropanol, n-Butanol, Isobutanol und 2-Ethylhexanol, sowie styrol.

Geeignete Comonomere C sind z. B. Vinyl- und Vinylidenhalogenide, wie z. B. Vinylchlorid und Vinylidenchlorid, α,β-ethylenisch ungesättigte Nitrile, wie z. B. Acrylnitril und Methacrylnitril, C₂-C₆-Monoolefine, wie z. B. Ethylen und Propylen sowie nichtaromatische Kohlenwasserstoffe mit 2 bis 8 Kohlenstoffatomen und mindestens 2 konjugierten olefinischen Doppelbindungen, wie z. B. Butadien, Isopren und Chloropren, sowie deren Mischungen.

Weiterhin geeignete Comonomere C sind vernetzende Monomere, die zusätzlich zu ihrer ethylenisch ungesättigten Doppelbindung eine Epoxy-, Hydroxy-, N-Methylol-, Carbonylfunktion oder zwei nichtkonjugierte, ethylenisch ungesättigte Doppelbindungen aufweisen. Dabei kann die Monomermischung M 0 bis 40 Gew.-%, bevorzugt 0 bis 20 Gew.-%, insbesondere bevorzugt 0,2 bis 15 Gew.-% dieser vernetzenden Monomere enthalten. Vorzugsweise erfolgt die Vernetzungsreaktion erst während der Trocknung des Polymerisates, wobei die Vernetzung durch Tempern und gegebenenfalls durch Zusatz von Katalysatoren, wie z. B. protonenabspaltenden Substanzen, wie Maleinsäure, Diammoniumhydrogenphosphat oder Ammoniumnitrat beschleunigt werden kann.

Beispiele für vernetzende Monomere C sind die Ester α,β-ungesättigter Carbonsäuren mit Diolen, wie z. B. Hydroxyalkylacrylate und Hydroxyalkylmethacrylate, N-hydroxyalkylierte Amide α,β-ungesättigter Carbonsäuren, z. B. N-hydroxyalkylierte Acrylamide und 5 Methacrylamide, wie N-Methylolacrylamid und N-Methylolmethacrylamid sowie Monomere mit mindestens zwei Vinylresten, mindestens zwei Vinylidenresten oder mindestens zwei Alkenylresten. Dazu zählen z. B. Alkylenglykoldiacrylate, Alkylenglykoldimethacrylate, wie z. B. Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Diallylmaleat, Diallylfumarat oder Methylbisacrylamid.

Weitere vernetzend wirkende Monomere C sind die Acrylamidoglykolsäure und Methacrylamidoglykolsäure und deren Ether, Ester oder Etherester mit Alkoholen, wie Alkanolen, mit bis zu 12 C-Atomen, beispielsweise Acrylamidomethoxyessigsäure, Acrylamidohydroxyessigsäuremethylester, Acrylamidomethoxyessigsäuremethylester, Methacrylamidomethoxyessigsäure, Methacrylamidohydroxoessigsäuremethylester, Methacrylamidomethoxyessigsäuremethylester, die entsprechenden Butyl- und -butoxyderivate, Acrylamidobutoxyessigsäurebutylester und Methacrylamidobutoxyessigsäurebutylester.

Weitere vernetzend wirkende Monomere C sind olefinisch ungesättigte Ketone oder Aldehyde. Als copolymerisierbare olefinisch ungesättigte Ketone oder Aldehyde kommen Monomere mit mindestens einer Aldo- oder Ketogruppe und einer polymerisierbaren Doppelbindung in Frage. Von besonderem Interesse sind Acrolein, Methacrolein, Diacetonacrylamid, Formylstyrol, Vinylalkylketone mit vorzugsweise 4 bis 7 C-Atomen, wie besonders Vinylmethylketon, Vinylethylketon und Vinylisobutylketon und/oder (Meth)acryloxyalkylpropanale der allgemeinen Formel (I) 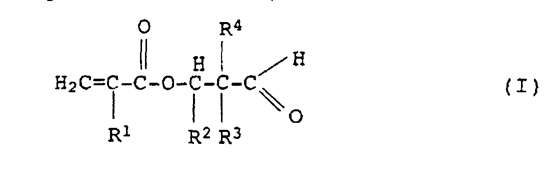 worin R¹ für Wasserstoff oder Methyl, R² für Wasserstoff oder C₁-C₃-Alkyl, R³ für C₁-C₃-Alkyl und R⁴ für C₁-C₄-Alkyl steht. Derartige (Meth)acryloxyalkylpropanale können nach dem in der DE-A-27 22 097 beschriebenen Verfahren durch Veresterung von β-Hydroxyalkylpropanalen der allgemeinen Formel (II) 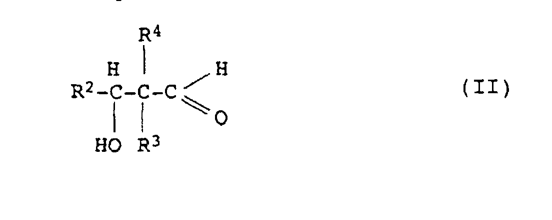 in der R², R³ und R⁴ die oben angegebenen Bedeutungen haben, mit Acryl- oder Methacrylsäure in Gegenwart von Verdünnungsmitteln sowie geringen Mengen Sulfonsäuren und Mineralsäuren hergestellt werden. Als Ketogruppen tragende Monomere kommen ferner Diacetonacrylat, Diacetonmethacrylat, Acetonylacrylat, 2-Hydroxypropylacrylatacetylacetat und Butandiol-1,4-acrylatacetylacetat in Frage. Die Menge der Aldo- bzw. Ketogruppen aufweisenden einpolymerisierten Comonomeren beträgt im allgemeinen etwa 0,5 bis 10 Gew.-%, vorzugsweise 1 bis 5 Gew.-%, bezogen auf die Monomermenge des Copolymerisats.

Das Monomer A wird ausgewählt unter den folgenden Klassen in den vorgenannten bevorzugten Mengenverhältnissen:
- Klasse I
   Ester der Acrylsäure und/oder Methacrylsäure mit Alkanolen mit 1 bis 12 Kohlenstoffatomen und/oder Styrol;
- Klasse II
   Styrol

Besonders bevorzugt sind Mischungen M mit Monomeren der Klasse I. Gemäß einer insbesonders bevorzugten Ausführungsform enthält die Mischung M dann als ethylenisch ungesättigte Monomere A Methylacrylat, Ethylacrylat, n-Butylacrylat, 2-Ethylhexylacrylat, Methylmethacrylat oder deren Mischungen. Dazu zählen insbesondere Mischungen, die 50 bis 90 Gew.-% Methylacrylat, 10 bis 40 Gew.-% n-Butylacrylat sowie gegebenenfalls zusätzlich Styrol und/oder Vinylacetat enthalten.

Die radikalische Homo- oder Copolymerisation der Mischung M erfolgt in Gegenwart eines Präpolymers, welches als Schutzkolloid eingesetzt wird. Dieses Präpolymer wird, wie im folgenden beschrieben, "in situ" zu Beginn der Polymerisation der Mischung M hergestellt.

Bevorzugt enthält das Präpolymer 0,2 bis 5,0 Gew.-%, bevorzugt 0,3 bis 1,5 Gew.-%, insbesondere 0,5 bis 1,1 Gew.-% mindestens eines wasserlöslichen, säuregruppenhaltigen Monomers B einpolymerisiert, wobei sich die Menge des Monomers B auf die Gesamtmenge der Monomere der Mischung M und des Präpolymers bezieht. Weiterhin enthält das Präpolymer im allgemeinen etwa 3,5 bis 6,5 Gew.-%, bevorzugt 4,0 bis 6,0 Gew.-%, an zusätzlichen Monomeren, ausgewählt unter den zuvor genannten Monomeren A und/oder C der Mischung M, ebenfalls bezogen auf die Gesamtmenge der zu polymerisierenden Monomere der Mischung M und des Präpolymers, einpolymerisiert. Der K-Wert des Präpolymers, bestimmt nach H. Fikentscher, Cellulose Chemie 13 (1932), S. 58 ff., liegt bei höchstens 80, bevorzugt höchstens 60, insbesondere höchstens 40.

Monomere B sind Acrylsäure, Methacrylsäure oder eine Mischung davon.

Gemäß einer speziellen Ausführungsform handelt es sich bei dem Polymerisat P um ein Terpolymer aus Acrylsäure, Methylacrylat und n-Butylacrylat.

Nach einer bevorzugten Ausführungsform wird die Löslichkeit der Gesamtmenge der Monomere A, B und C in 100 g Wasser bei 25° so gewählt, dass mindestens 50 Gew.-% der Monomere eine Löslichkeit in einem Bereich von 1,5 g bis 10 g aufweisen. Bevorzugt weisen mindestens 50 Gew.-%, insbesondere mindestens 70 Gew.-%, der Monomere eine Löslichkeit im Bereich von 4,0 bis 10,0 g auf. Nach einer weiteren bevorzugten Ausführungsform wird die Löslichkeit der Gesamtmenge der Monomere A, B und C in 100 g Wasser bei 25° so gewählt, dass höchstens 50 Gew.-%, bevorzugt 20 bis 30 Gew.-%, der Monomere eine Löslichkeit von höchstens 0,2 g aufweisen.

Die Glasübergangstemperatur des Polymerisats P beträgt bevorzugt ≤ 15 °C, insbesondere ≤ 10 °C. Vorzugsweise liegt die Glasübergangstemperatur in einem Bereich von + 5°C bis - 5°C. Die Glasübergangstemperatur des Polymeren kann nach der Methode der Differentialthermoanalyse (DTA) oder differential scanning calorimetry (DSC, wie in ASTM 3418/82 beschrieben) bestimmt werden.

Die erfindungsgemäß eingesetzten Schutzkolloide können sowohl als einzige Dispergiermittel als auch im Gemisch mit anderen grenzflächenaktiven Substanzen als Zusatzstoffen angewendet werden. Diese können den erfindungsgemäßen Klebstoffen sowohl in der Komponente a1) wie auch gewünschtenfalls bei der Formulierung der Klebstoffe als Komponente d) zugegeben werden.

Geeignete weitere grenzflächenaktive Zusatzstoffe in a1) und oder d) sind die üblicherweise bei der Emulsionspolymerisation als Dispergiermittel eingesetzten Schutzkolloide und Emulgatoren, wie sie z. B. in Houben-Weyl, Methoden der organischen Chemie, Band XIV/1, Makromolekulare Stoffe, Georg-Thieme-Verlag, Stuttgart, 1961, S. 411 bis 420 beschrieben sind. Geeignete zusätzliche Schutzkolloide sind z. B. Polyvinylalkohole und teilverseifte Polyvinylacetate, Polyacrylate, Polyvinylpyrrolidon, Cellulose und Cellulosederivate, wie z. B. Methylcellulose, Hydroxyethylcellulose, Carboxymethylcellulose, Stärke und Stärkederivate, wie z. B. Cyanalkyletherstärke, Hydroxyalkyletherstärke, Carboxymethylstärke etc. Als Emulgatoren sind sowohl anionische, kationische als auch nichtionische Emulgatoren geeignet.

Vorzugsweise werden als grenzflächenaktive Substanzen Emulgatoren eingesetzt, deren relative Molekulargewichte im Unterschied zu den Schutzkolloiden üblicherweise unter 3500 Dalton liegen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₁₀), Ethoxylate langkettiger Alkohole (EO-Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylrest C₁₀-C₂₂, mittlerer Ethoxylierungsgrad 10 bis 50) und darunter besonders bevorzugt solche mit einem linearen C₁₂-C₁₈-Alkylrest und einem mittleren Ethoxylierungsgrad von 10 bis 50 sowie ethoxylierte Monoalkylphenole.

Geeignete anionische Emulgatoren sind beispielsweise Alkali- und Ammoniumsalze von Alkylsulfaten (Alkylrest: C₈-C₂₂), von Schwefelsäurehalbestern ethoxylierter Alkanole (EO-Grad: 2 bis 50, Alkylrest: C₁₂-C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenoylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-C₆-C₂₀-Alkylpyridinen, -morpholinen oder - imidazolen, z. B. N-Laurylpyridiniumchlorid.

Nach einer geeigneten Ausführungsform wird als Emulgator ein α-Sulfo-ω-(dodecyloxy)-poly(oxyethyl)ammoniumsalz, z. B. C₁₂H₂₅(EO)₃₀ SO₂NH₄, erhältlich als Disponil®-Marken der Henkel KgaA, eingesetzt.

Wird einer der vorgenannten Emulgatoren verwendet, so ist dieser nach Maßgabe seiner Verträglichkeit mit dem Präpolymer auszuwählen. Die Menge an Emulgator beträgt im allgemeinen etwa 0,01 bis 10 Gew.-%, bezogen auf die Menge an polymerisierten Monomeren.

Die Polymerisation Mischung M zu einem Polymerisat P und/oder die Herstellung des Präpolymers kann vorzugsweise in Gegenwart eines Stärkeabbauproduktes als Schutzkolloid erfolgen. Geeignet sind z. B. Stärkeabbauprodukte mit einem gewichtsmittleren Molekulargewicht von 2500 bis 25000. Die Stärkeabbauprodukte sind aus Stärke erhältlich durch Hydrolyse in wässriger Phase, oder durch thermischen Abbau (Röstdextrine). Durch Hydrolyse in wässriger Phase erhältliche Stärkeabbauprodukte werden im Unterschied zu den Röstdextrinen üblicherweise als verzuckerte Stärken bezeichnet und sind im Handel erhältlich (z. B. die C*PUR Produkte 01906, 01908, 01910, 01912, 01915, 01921, 01924, 01932 oder 01934 der Cerestar Deutschland GmbH, Krefeld).

Die Herstellung verzuckerter Stärken ist allgemein bekannt und u. a. in Günther Tegge, Stärke und Stärkederivate, Behr's Verlag, Hamburg 1984, S. 173 und S. 220 ff. sowie in der EP-A 441 197 beschrieben. Vorzugsweise handelt es sich bei den erfindungsgemäß zu verwendenden verzuckerten Stärken um solche, deren gewichtsmittleres Molekulargewicht M_{w} im Bereich von 4000 bis 16000, besonders bevorzugt im Bereich von 6500 bis 13000 liegt.

Die Komponente a1) kann weiterhin wenigstens einen Saatlatex umfassen, welcher "in situ" oder zuvor separat hergestellt werden kann. Vorzugsweise wird als Saatlatex eine zuvor hergestellte, feinteilige Polystyroldispersion mit einem Feststoffgehalt im Bereich von etwa 30 bis etwa 35 Gew.-% eingesetzt.

Bevorzugt erfolgt die radikalische Copolymerisation der Mischung M in Gegenwart eines Polymerisationsreglers als Zusatzstoff a1). Dabei wird zur Herstellung der erfindungsgemäßen Klebstoffdispersionen a) auf den Einsatz von Butenol, welches als toxikologisch nicht ganz unbedenklich gilt, als Polymerisationsregler verzichtet. Vorzugsweise wird die Monomermischung M in Gegenwart von Mercaptanen als Polymerisationsregler polymerisiert. Dabei wird bevorzugt t-Dodecylmercaptan als Polymerisationsregler eingesetzt. Die Menge beträgt dann im allgemeinen etwa 0,01 bis 5 Gew.-%, bezogen auf die Gesamtmenge der Mischung M.

Den Klebstoffdispersionen a) können weiterhin übliche Zusatzstoffe in der Vorlage, einem der Zuläufe oder nach Abschluß der Polymerisation zugesetzt werden. So kann gewünschtenfalls der pH-Wert der Dispersion durch Säuren oder Basen, z. B. Alkalihydroxide, Alkalicarbonate, Alkaliphosphate, Alkaliacetate, Ammoniak, HCl etc. eingestellt werden. Vorzugsweise wird das Präpolymer auf Basis der säuregruppenhaltigen Monomere B zumindest teilneutralisiert eingesetzt, so dass ein Teil der im folgenden beschriebenen Komponente a2) bereits bei der Herstellung des Präpolymers zugegeben wird. Weitere geeignete Zusatzstoffe sind Reduktions- und Bleichmittel, wie z. B. die Alkalimetallsalze der Hydroxymethansulfinsäure (z. B. Rongalit®C der BASF AG).

Die Polymere P werden in der Regel als wäßrige Dispersionen mit Gesamtfeststoffgehalten von 20 bis 70 Gew.-%, bevorzugt 30 bis 60 Gew.-%, hergestellt. Die Polymerisate können aber auch als Pulver, z.B. durch Sprühtrocknen, gewonnen und redispergiert werden.

### Komponente a2)

Der pH-Wert der durch radikalische Emulsionspolymerisation in Gegenwart eines der zuvor genannten Präpolymere erhaltenen wäßrigen Polymerdispersionen kann zur Formulierung der erfindungsgemäßen Klebstoffdispersionen a) durch Zusatz einer Base, z.B. eines Alkalimetallhydroxids, wie Natriumhydroxid oder Kaliumhydroxid, Ammoniak, einem flüchtigen organischen Amin, vorzugsweise Mono-, Di- oder Triethanolamin oder ein Mono-, Di- oder Trialkylamin, wie Ethylamin, Dimethylamin, Trimethyl- oder Triethylamin, sowie cyclischen Aminen, wie Pyrrolidin, Piperidin, Piperazin oder Morpholin, oder deren Mischungen eingestellt werden. Bevorzugt wird Natriumhydroxid oder Ammoniak zur Neutralisation eingesetzt. Der pH-Wert der resultierenden Klebstoffdispersionen a) beträgt etwa 6 bis 8, bevorzugt etwa 7.

### Komponente a3)

Die Klebstoffdispersionen a) können gegebenenfalls ein mit Wasser mischbares Lösungsmittel enthalten. Vorzugsweise ist der Anteil an organischen Lösungsmitteln bei den erfindungsgemäßen Klebstoffen gering und beträgt höchstens etwa 10 Gew.-%, bezogen auf das Gesamtgewicht der Komponente a). Geeignete wassermischbare organische Lösungsmittel sind z. B. C₁-C₄-Alkohole, wie Methanol, Ethanol, n-Propanol, Isopropanol und n-Butanol oder Ketone, wie Methylethylketon oder Aceton. Vorzugsweise wird Isopropanol verwendet.

Gegebenenfalls kann der Klebstoffdispersion a) zusätzlich zu den in den Komponenten a1) bis a3) enthaltenen Wassermengen weiteres Wasser zugesetzt werden.

Die Viskosität der Klebstoffdispersion a) beträgt vorzugsweise etwa 3000 bis 7000 mPa·s.

Nach einer möglichen Verfahrensvariante erfolgt die Formulierung der vorgenannten Klebstoffdispersionen a) nicht separat, sondern die zuvor beschriebenen Komponenten a1) bis a3) werden in einem Schritt mit den Komponenten b), c) und d) zu dem erfindungsgemäßen Klebstoff formuliert.

### Komponente b)

Bei dem erfindungsgemäßen Verfahren können als Komponente b) allgemein übliche Polysaccharide eingesetzt werden. Dazu zählen z.B. Cellulose, Celluloseabbauprodukte, Stärken, z. B. native Stärken aus der Gruppe Maisstärke, Kartoffelstärke, Weizenstärke, Reisstärke, Tapiokastärke, Sagostärke, Sorghumstärke, Maniokstärke, Erbsenstärke oder Mischungen der genannten nativen Stärken. Werden Stärken mit einem bestimmten Amylopectingehalt gewünscht, so können diese beispielsweise durch Stärkefraktionierung üblicher nativer Stärken oder aus solchen Pflanzen gewonnen werden, die praktisch reine Amylopectinstärke produzieren. Geeignete Stärken und Stärkederivate werden in Günther Tegge, Stärke und Stärkederivate, Hamburg, Behr's-Verlag 1984, beschrieben. Neben den nativen Stärken eignen sich auch hydrolytisch oder enzymatisch abgebaute Stärken, wie beispielsweise Dextrine, z. B. Weiß- oder Gelbdextrine und Maltodextrine, oder oxidierte Stärken, wie z. B. Dialdehydstärke. Weiterhin sind chemisch modifizierte Stärken, z. B. mit anorganischen oder organischen Säuren veresterte, insbesondere phosphatierte und acetylierte Stärken sowie mit organischen Halogenverbindungen, Epoxiden oder Sulfaten veretherte Stärken geeignet. Stärken und Verfahren zu ihrem Abbau und ihre chemische Modifizierung werden in Ullmanns Encyclopedia of Industrial Chemistry, 5. Auflage, Band A25, S. 2 f. beschrieben, worauf hier Bezug genommen wird.

Weitere geeignete Komponenten b) sind Proteine und/oder Proteinabbauprodukte. Geeignete Ausgangsproteine werden z. B. aus tierischen oder pflanzlichen Quellen gewonnen. Dabei zählen z. B. tierische Proteine, wie Gelatine, Casein oder Fischproteine, die z. B. aus Haaren, Hörnern, Hufen, Klauen, Nägeln, Knochen oder Milch durch übliche Verfahren gewonnen werden. Zu den pflanzlichen Proteinen zählen z. B. Proteine aus Reis, Weizen, Kartoffeln oder Ölsamen, die ebenfalls in üblicher Weise gewonnen werden. Zur Herstellung von Proteinabbauprodukten können diese Ausgangsproteine mit Hilfe von Säuren, Laugen oder Enzymen in Oligo- und Polypeptide mit einem geringeren Molekulargewicht als die Ausgangsproteine aufgespalten werden. Zur Herstellung der erfindungsgemäßen Klebstoffe wird vorzugsweise Casein eingesetzt. Dieses ist z. B. als Casein ST 50 F der Fa. Türmerleim erhältlich.

### Komponente c)

Die erfindungsgemäßen Klebstoffe können weiterhin mindestens einen Füllstoff c) enthalten. Geeignete Füllstoffe sind z. B. Kreide, Kalzit, Dolomit, Quarzmehl, Titandioxid, Aluminiumsilikat, Talkum, Glimmer, Kieselgur, Gips, Magnesit, Schiefermehl, Bariumsulfat, harte Polymerisate oder deren Mischungen.

Die Komponente c) kann in den erfindungsgemäßen Klebstoffen vorzugsweise in einer Menge von etwa 40 bis 80 Gew.-% enthalten sein.

### Komponente d)

Die erfindungsgemäßen Klebstoffe können weiterhin mindestens einen Emulgator enthalten, der, wie zuvor erwähnt, bereits der Komponente a) bei der Polymerisation der Mischung M zugesetzt werden kann. Geeignete Emulgatoren d) sind die zuvor genannten.

### Komponente e)

Weiterhin geeignete Zusätze e) sind z. B. Konservierungsmittel, Farbstoffe, Pigmente, Pigmentverteiler, Weichmacher, Verdicker, Phenol-Formaldehyd-Harze, Melaminharze, (Thio)harnstoff, Borax, Isocyanate, Epoxide, Naturlatex, andere Polymerdispersionen, z.B.

Dispersionen auf Basis von Estern von Vinylalkohol mit Monocarbonsäuren, wie Vinylformiat, Vinylacetat, Vinylpropionat, etc, sowie Polyvinylalkohol.

### Komponente f)

Gewünschtenfalls kann den erfindungsgemäßen Klebstoffen noch ein zusätzlicher Anteil Wasser zugesetzt werden.

Ein weiterer Gegenstand der Erfindung ist ein Verfahren zur Herstellung der zuvor beschriebenen Klebstoffe, das dadurch gekennzeichnet ist, dass man
i) in einem Reaktor wenigstens ein wasserlösliches, vorzugsweise säuregruppenhaltiges Monomer B ausgewählt unter Acrylsäure und Methacrylsäure sowie gegebenenfalls weitere Monomere, ausgewählt unter den zuvor genannten Monomeren A und/oder C, gegebenenfalls in Gegenwart der Komponenten a2) und/oder a3) und/oder weiterer Zusatzstoffe, zu einem Präpolymer umsetzt, und ohne Isolierung des Präpolymers
ii) die Mischung M in Gegenwart des Präpolymers sowie gegebenenfalls der Komponenten a2) und/oder a3) und/oder weiterer Zusatzstoffe nach der Methode der tadikalischen, wässtigen Emulsionspolymetisation zu einem Polymerisat P umsetzt,
iii) gegebenenfalls mindestens eine weitere Komponente, ausgewählt unter a2), a3), b), c), d), e), f), und Mischungen davon, zugibt.

### Stufe i)

Die Herstellung des Präpolymers, welches bei der Polymerisation der Mischung M als Schutzkolloid dient, ertalst "in situ" vor der Polymerisation der Mischung M nach dem Verfahren der radikalischen, wässrigen Emulsionspolymerisation. Die Emulsionspolymerisationstemperatur beträgt dabei in der Regel etwa 30 bis 120 °C, bevorzugt etwa 40 bis 95 °C. Das Polymerisationsmedium kann sowohl nur aus Wasser als auch aus Mischungen aus Wasser und wassermischbaren Flüssigkeiten, wie z. B. Methanol, bestehen. Vorzugsweise wird nur Wasser verwendet. Die Emulsionspolymerisation kann sowohl als Batch-Prozess als auch in Form eines Zulaufverfahrens, einschließlich Stufen- und Gradientenfahrweise, durchgeführt werden. Bevorzugt sind die letztgenannten Zulaufverfahren, bei denen man zuerst das Präpolymer und anschließend die Mischung M, ohne Zwischenisolierung des Präpolymers, umsetzt. Bevorzugt wird ein Teil des Polymerisationsmediums, welches gegebenenfalls einen Teil des Polymerisationsansatzes enthalten kann, vorgelegt, auf die Polymerisationstemperatur erhitzt, gegebenenfalls unter Bildung eines Saatlatex anpolymerisiert und anschließend der Rest des Ansatzes, üblicherweise über mehrere räumlich getrennte Zuläufe, von denen einer oder mehrere die Monomeren in reiner oder in emulgierter Form enthalten kann, kontinuierlich, stufenweise oder unter Überlagerung eines Konzentrationsgefälles unter Aufrechterhaltung der Polymerisation der Polymerisationszone zugeführt.

Nach einer geeigneten Ausführungsform des erfindungsgemäßen Verfahrens erfolgt die Umsetzung in Schritt i) in Gegenwart eines Saatlatex. Diese Saatlatices können durch Vorlage und Anpolymerisieren geeigneter Monomere "in situ" hergestellt werden. Bevorzugt wird eine vorgefertigte Saatlatex, wie z. B. die zuvor als geeignet genannten, feinteiligen Polystyroldispersionen, eingesetzt, welche einem der Zuläufe oder bevorzugt der Vorlage zugesetzt werden kann.

Nach einer weiteren geeigneten Ausführungsform des erfindungsgemäßen Verfahrens erfolgt die Umsetzung in Schritt i) zur Herstellung des Präpolymers in Gegenwart eines zusätzlichen Schutzkolloids. Bevorzugt werden dabei die zuvor als geeignet genannten Schutzkolloide auf Basis von Stärkeabbauprodukten eingesetzt, welche vorzugsweise der Vorlage zugesetzt werden.

Bevorzugt werden die zur Herstellung des Präpolymers eingesetzten wasserlöslichen, säuregruppenhaltigen Monomere B in teilneutralisierter Form eingesetzt oder im Verlauf der Polymerisation teilneutralisiert. Nach einer weiteren bevorzugten Ausführungsform des erfindungsgemäßen Verfahrens wird daher in Stufe i) der Vorlage oder einem der Zuläufe bereits ein Teil der zuvor beschriebenen Komponente a1) zugesetzt, wobei vorzugsweise Ammoniak eingesetzt wird. Dann beträgt das Gewichtsverhältnis von Monomer B zu Ammoniak im allgemeinen etwa 3,5:1 bis 7:1, bevorzugt etwa 4:1 bis 6,5:1, wobei bei diesem Gewichtsverhältnis die Menge an Komponente a2), die zusätzlich zum Einstellen des pH-Wertes benötigt wird, nicht berücksichtigt ist. Nach einer weiteren bevorzugten Ausführungsform wird der zuvor als Komponente a1) beschriebene Polymerisationsregler bereits in Schritt i) zu dem Polymerisationsansatz gegeben. Der Polymerisationsregler kann dabei sowohl vorgelegt als auch einem der Zuläufe zugegeben werden.

Zur Herstellung der erfindungsgemäß als Schutzkolloid eingesetzten Präpolymere kann dem Polymerisationsansatz in Schritt i) ein Teil der zuvor genannten Monomere A und/oder C zugesetzt werden, welche dann mit dem wasserlöslichen, säuregruppenhaltigen Monomer B copolymerisiert werden. Vorzugsweise werden dabei in Schritt i) höchstens 25 Gew.-%, bevorzugt höchstens 10 Gew.-%, insbesondere höchstens 6 Gew.-% der Gesamtmenge der zu polymerisierenden Monomere A und/oder B und/oder C umgesetzt.

Als Polymerisationsinitiatoren zur Polymerisation des Präpolymers und/oder der Mischung M in den Schritten i) und/oder ii) können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Ebenfalls als Initiatoren geeignete organische Peroxide sind in der EP-A- 0 536 597 beschrieben. Die genannten Polymerisationsinitiatoren werden in üblichen Mengen eingesetzt, z. B. in Mengen von 0,01 bis 5, vorzugsweise 0,1 bis 2,0 Gew.-%, bezogen auf die zu polymerisierenden Monomere.

Als Initiatoren kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetallhydrogensulfit, -sulfit, -thiosulfat, -hyposulfit, -pyrosulfit oder -sulfid, Metallsalze, wie Eisen-II-ionen oder Silberionen oder Natriumhydroxymethylsulfoxylat.

In der Regel beträgt die Menge der eingesetzten radikalischen Initiatorsysteme, bezogen auf die Gesamtmenge der zu polymerisierenden Monomere A und/oder B und/oder C 0,1 bis 2 Gew.-%. Besonders bevorzugt werden Ammonium- und/oder Alkalimetallperoxodisulfate für sich oder als Bestandteil kombinierter Systeme als Initiatoren eingesetzt. Besonders bevorzugt wird Natriumperoxodisulfat verwendet.

Das radikalische Initiatorsystem kann sowohl vollständig in das Polymerisationsgefäß vorgelegt, als auch nach Maßgabe seines Verbrauchs im Verlauf der radikalischen wässrigen Emulsionspolymerisation in den Stufen i) und/oder ii) kontinuierlich oder stufenweise eingesetzt werden. Im einzelnen hängt dies in bekannter Weise sowohl von der chemischen Natur des Initiatorsystems als auch von der Polymerisationstemperatur ab. Vorzugsweise wird das Initiatorsystem nach Maßgabe des Verbrauchs der Polymerisationszone zugeführt.

Die radikalische wässrige Emulsionspolymerisation erfolgt in den Stufen i) und/oder ii) in der Regel bei Normaldruck, sie kann aber auch unter erhöhtem oder reduziertem Druck erfolgen.

### Schritt ii)

Die Homo- und/oder Copolymerisation der Mischung M zur Herstellung der wässrigen Polymerisatdispersionen P nach dem Verfahren der radikalischen, wässrigen Emulsionspolymerisation in Anwesenheit der zuvor beschriebenen Präpolymere als Schutzkolloide erfolgt in üblicher Weise. Die Polymerisationsbedingungen entsprechen im wesentlichen denen bei der Herstellung des Präpolymers. Gewünschtenfalls können jedoch auch abweichende Polymerisationsbedingungen eingestellt werden. Dazu zählt zum Beispiel die Wahl einer anderen Polymerisationstemperatur, die Zugabe von wassermischbaren Flüssigkeiten zu dem Polymerisationsmedium oder der Einsatz weiterer der zuvor genannten Zusatzstoffe. Vorzugsweise erfolgt die Umsetzung in Schritt ii) bei einem pH-Wert im Bereich von etwa 4 bis 6, bevorzugt etwa 4,9 bis 5,7. Die Zugabe der Monomeren und/oder von weiteren Zusatzstoffen kann wiederum über mehrere, räumlich getrennte Zuläufe, in reiner oder emulgierter Form, kontinuierlich, stufenweise oder unter Überlagerung eines Konzentrationsgefälles unter Aufrechterhaltung der Polymerisation erfolgen.

Die Umsetzungen in den Schritten i) und ii) können sowohl separat, d. h. zweistufig oder mehrstufig, als auch einstufig in Gradientenfahrweise erfolgen. Nach einer bevorzugten Ausführungsform erfolgen die Umsetzungen der Stufen i) und ii) als ein zweistufiges Verfahren. Dabei werden dann im allgemeinen im Verlauf von 35 % der Gesamtpolymerisationszeit zur Herstellung des Präpolymeren und des Polymerisats P mindestens 60 Gew.-%, bevorzugt mindestens 70 Gew.-%, insbesondere mindestens 90 Gew.-% der Gesamtmenge der Monomere B der Reaktionszone zugeführt.

### Schritt iii)

Die Formulierungen der erfindungsgemäßen Klebstoffe, insbesondere die Mischung der Komponente a) mit den übrigen Komponenten, kann mit den üblichen Apparaturen nach den üblichen Verfahren durchgeführt werden. Dazu zählen zum Beispiel übliche Rührvorrichtungen, die dem Fachmann bekannt sind.

Die erfindungsgemäßen Klebstoffdispersionen und die aus ihnen formulierten Klebstoffe zeichnen sich durch eine hohe Viskosität bei niedrigen Geschwindigkeitsgefällen aus. Sie bilden alleine oder in Abmischungen mit hochviskosen Naturstoffen, vorzugsweise mit Casein, Filme von hoher Klebrigkeit und niedriger Kohäsion. Weiterhin wurde bei den erfindungsgemäßen Klebstoffen auf toxikologisch bedenkliche Komponenten, insbesondere auf den Polymerisationsregler Butenol, verzichtet. Sie sind somit für einen Einsatz im Lebensmittelsektor geeignet und üben im allgemeinen keine gesundsheitsschädigende und/oder reizende Wirkung auf das verarbeitenden Personal aus. Vorteilhafterweise bilden die erfindungsgemäßen Klebstoffe transparente Filme aus, die somit auch für das Etikettieren von Folienetiketten geeignet sind.

Ein weiterer Gegenstand der Erfindung ist somit die Verwendung der erfindungsgemäßen Klebstoffe zur Herstellung von Verpackungungen aus Papier, Pappe oder Karton, sowie zur Etikettierung nichtsaugender Substrate. Dazu zählen vorzugsweise Substrate aus Glas, Metall und Kunststoffen, welche insbesondere für die Verpackung von Lebensmitteln eingesetzt werden.

Die Erfindung wird anhand der folgenden, nicht einschränkenden Beispiele näher erläutert.

### Beispiele

### a) Herstellung der Klebstoffdispersionen

Der Feststoffgehalt der wässrigen Polymerdispersionen wird nach DIN 53 189 bestimmt.

### Versuchsvorschrift A:

Die Herstellung der Klebstoffdispersion erfolgt in zwei Stufen, wobei in der ersten Stufe ein säurereiches Präpolymer und in der zweiten Stufe ein säurearmes Polymer hergestellt werden. Eine Vorlage gemäß Tabelle 1, enthaltend das säuregruppenhaltige Monomer, wird auf 80 °C aufgeheizt. Danach werden 5 % von Zulauf 1 und 30 % von Zulauf 2 nach Tabelle 1 zugegeben und 15 min bei 80 °C anpolymerisiert und anschließend mit der Dosierung der Restmengen der Zuläufe 1 und 2 begonnen. Die Zugabe erfolgt kontinuierlich über 2 Stunden (Zulauf 1 und 2). Danach wird 0,5 Stunden bei 80 °C nachpolymerisiert. Die Zuläufe 3 und 4 werden zugegeben, danach Zulauf 5.

Nach dem Abkühlen wird mit Ammoniaklösung auf einen pH-Wert von 7 eingestellt. Der Feststoffgehalt der wässrigen Polymerdispersion ist in Tabelle 1 wiedergegeben.

### Versuchsvorschrift B:

Die Herstellung erfolgt nach dem Zulaufverfahren. Die Vorlage wird auf 80 °C aufgeheizt und es wird mit der Dosierung der Zuläufe 1, 2 und 3 (säuregruppenhaltiges Monomer) nach Tabelle 1 begonnen. Die Zugabe erfolgt kontinuierlich über 2 Stunden (Zulauf 1), 2,5 Stunden (Zulauf 2) und 0,5 Stunden (Zulauf 3). Danach wird 0,5 Stunden bei 80 °C nachpolymerisiert. Die Zuläufe 4 und 5 werden zugegeben.

Nach dem Abkühlen wird mit Ammoniaklösung auf einen pH-Wert von 7 eingestellt. Der Feststoffgehalt der wässrigen Polymerdispersion ist in Tabelle 1 wiedergegeben.

### Versuchsvorschrift C:

Die Vorlage wird auf 85 °C aufgeheizt und es werden 5 % von Zulauf 2 nach Tabelle 1 zugegeben. Anschließend wird die Dosierung der Zuläufe 1, 2 und 3 begonnen. Die Zugabe erfolgt kontinuierlich über 1 Stunde (Zulauf 1), 1,5 Stunden (Zulauf 2) und 0,25 Stunden (Zulauf 3). Danach wird 0,5 Stunden bei 85 °C nachpolymerisiert. Die Zuläufe 4 und 5 werden zugegeben.

Nach dem Abkühlen wird mit Ammoniaklösung auf einen pH-Wert von 7 eingestellt. Der Feststoffgehalt der wässrigen Polymerdispersion ist in Tabelle 1 wiedergegeben.

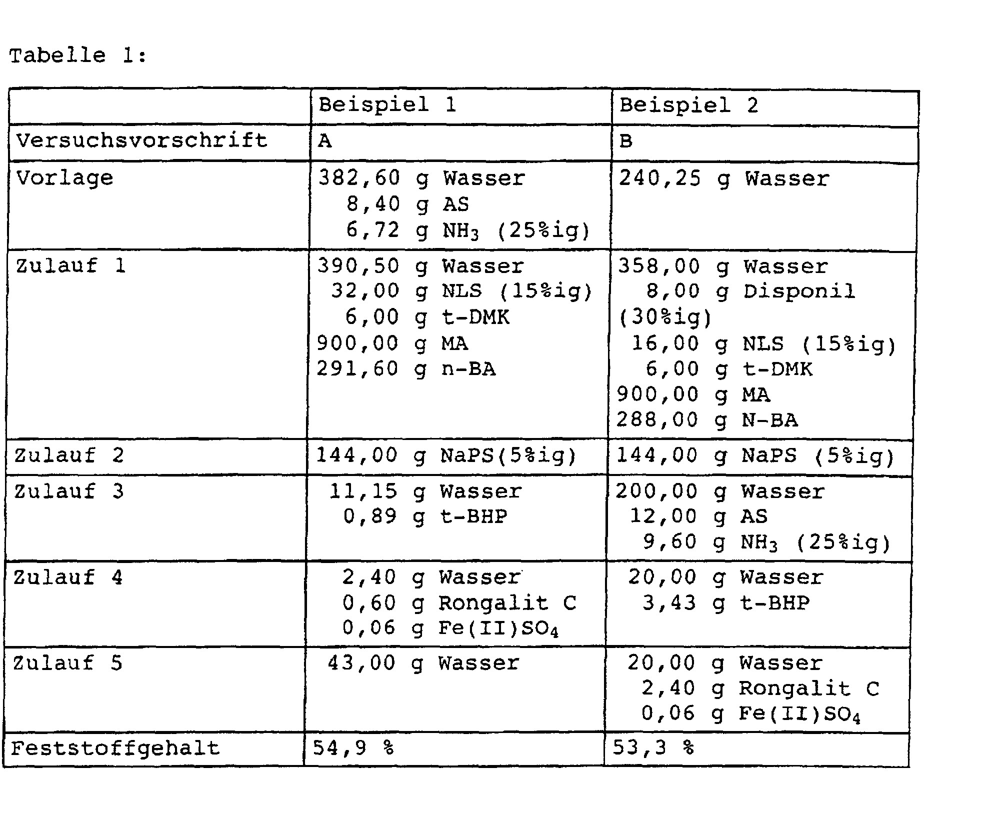

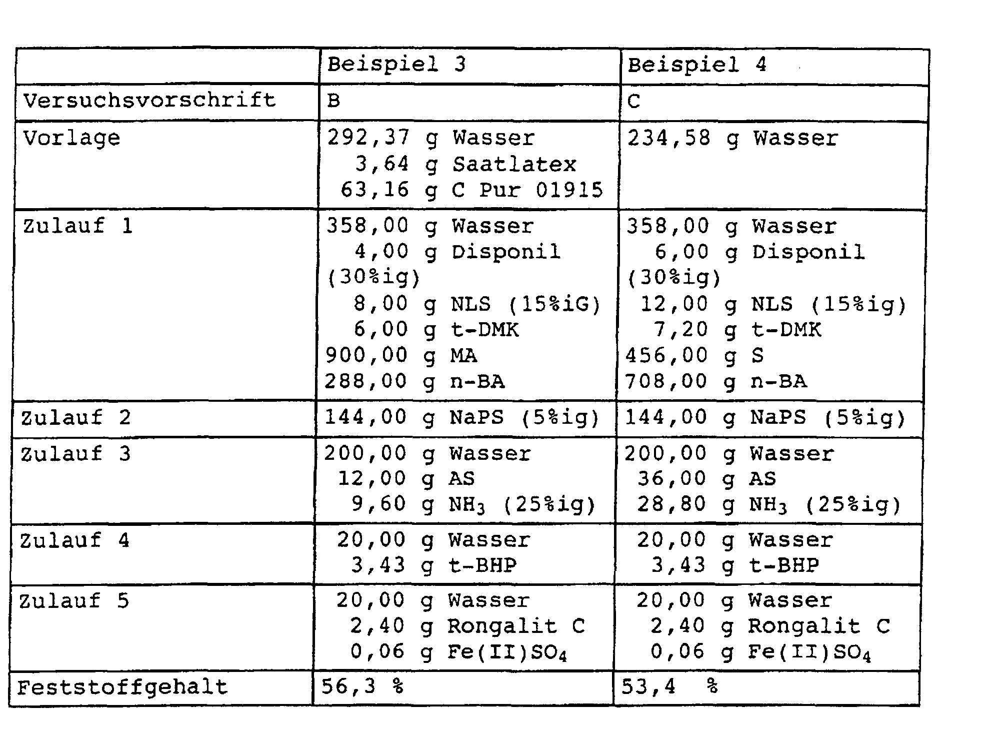

### Abkürzungen

- AS: = Acrylsäure
- n-BA =: n-Butylacrylat
- t-BHP® =: t-Butylhydroperoxid
- C Pur®01915 =: Maltodextrin der Firma Cerestar
- t-DMK =: t-Dodecylmercaptan
- MA =: Methylacrylat
- NaPS =: Natriumperoxodisulfat
- NH₃ =: Ammoniaklösung (25%ig)
- NLS =: Natriumlaurylsulfat-Lösung (15%ig)
- Disponil® =: Disponil® FES 77 = α-Sulfo-ω-(dodecyloxy)poly(oxyethylen)ammo- niumsalz C₁₂H₂₅(EO)₃₀SO₃NH₄ (Henkel KgaA)
- Rongalit C® =: Natriumsalz der Hydroxymethansulfinsäure (BASF AG)
- S =: Styrol
- Saatlatex =: feinteilige Polystyroldispersion mit 33 %
- Wasser =: entsalztes Wasser

### Rheologisches Verhalten

Tabelle 2 gibt das rheologische Verhalten der Klebstoffdispersionen wieder. Als Vergleich wurde eine handelsübliche Dispersion auf Basis eines Acrylsäureester-Copolymers eingesetzt.

**Tabelle 2:**

| Viskosität in Abhängigkeit verschiedener Schergeschwindigkeiten | | | | | |
|---|---|---|---|---|---|
| Schergeschwindigkeit [l/s] | Beispiel 1 2 3 [mPa·s] | Beispiel [mPa·s] | Beispiel [mPa·s] | Beispiel 4 [mPa·s] | Vergleich [mPa·s] |
| 25 | 7000 | 6200 | 5600 | 5600 | 3500 |
| 45 | 4600 | 4000 | 4000 | 3700 | 2600 |
| 100 | 2400 | 2100 | 2500 | 2000 | 1700 |
| 250 | 1300 | 1100 | 1300 | 1100 | 1100 |
| 500 | 970 | 790 | 790 | 690 | 800 |

Die Fließkurven (0-500 1/s) wurden nach DIN 53019 an dem Gerät Contraves Rheomat 115 aufgenommen. Protokolliert werden die Viskositäten bei den Schergeschwindigkeiten 25, 45, 100, 250 und 500 1/s.

Fazit: Die erfindungsgemäßen Beispiele besitzen wie die marktübliche Vergleichsdispersion die notwendigen rheologischen Eigenschaften, die einen Verpackungsklebstoff auszeichnen.

### Haftungspektrum

Die Haftungseigenschaften werden an vorgeprimerten Baumwollstreifen auf verschiedenen Untergründen untersucht. Dazu werden Baumwollstreifen (ca. 150 x 20 mm) mit einem 0,7 mm Drahtrakel mit dem verdünnten erfindungsgemäßen Klebstoff (3 Teile Klebstoff, 1 Teil Wasser) vorgeprimert. Gleichzeitig wird der unverdünnte Klebstoff mit einem 1,2 mm Drahtrakel auf die verschiedenen Substrate aufgetragen und sofort naß gegen die geprimerten, ebenfalls noch nassen Baumwollstreifen verklebt. Danach wird mit einer 2,5 kg Rolle viermal über die Verklebung gerollt. Nach 3 Tagen Trocknung im Normklima (23°C/50% rel. Luftfeuchte) wird die Schälfestigkeit bestimmt. Dazu wird eine Zugprüfmaschine mit einer Vorschubgeschwindigkeit von 100 mm/min, einem Vorweg von 20 mm und einer Prüfstrecke von 100 mm eingesetzt. Die Ergebnisse sind in Tabelle 3 wiedergegeben.

**Tabelle 3**

| Haftungsspektrum* in N/10 mm: | Bsp. 1 | Bsp. 2 | Bsp. 3 | Bsp. 4 | Vergleich |
|---|---|---|---|---|---|
| PETP, 0050 mm | 5 | 3,9 | 4,1 | 6,4 | 3,1 |
| PE, 0,100 mm | 0,1 | 0,3 | 0,3 | 0,3 | 0,2 |
| PP, 0040 mm | 0,8 | 0,5 | 0,5 | 0,5 | 0,5 |
| Glas | 14,7 | 9,7 | 8,8 | 17,0 | 11,1 |
| PVC, 0,250 mm | 5,0 | 4,8 | 4,2 | 1,3 | 5,1 |
| UV-lack. Karton | 1,0 | 1,2 | 1,0 | 1,3 | 1,3 |

| | | | | | |
|---|---|---|---|---|---|
| * mit vorgeprimerten Baumwollstreifen Abzugsgeschwindigkeit: 100 mm/min | | | | | |

Mit den erfindungsgemäßen Klebstoffdispersionen werden im allgemeinen gleich gute oder bessere Ergebnisse erzielt als mit den Vergleichsdispersionen.

### b) Herstellung von Klebstoffformulierungen

Zur Herstellung von Klebstoffen wurden die erfindungsgemäßen Klebstoffdispersionen der Beispiele 1, 2, 3 und 4 sowie die Vergleichsdispersion im Verhältnis 20 Teile Klebstoffdispersion zu 50 Teile Casein ST 50 F der Fa. Türmerleim abgemischt. Danach wurden wiederum die Haftungseigenschaften nach dem zuvor beschriebenen Verfahren bestimmt. Die Ergebnisse sind in Tabelle 4 wiedergegeben.

**Tabelle 4:**

| 20 Teile Acrylatdispersion und 50 Teile Casein ST 50 F | | | | | |
|---|---|---|---|---|---|
| Haftungsspektrum* in N/10 mm: | Bsp. 1 | Bsp. 2 | Bsp. 3 | Bsp. 4 | Vergleich |
| Glas | 9,5 | 9,0 | 10,3 | 6,1 | 3,3 |

| | | | | | |
|---|---|---|---|---|---|
| * mit vorgeprimerten Baumwollstreifen Abzugsgeschwindigkeit: 100 mm/min | | | | | |

### Filmeigenschaften

Zur Bestimmung der Filmeigenschaften wird die Reißdehnung des Films in Anlehnung an DIN 53455 bestimmt und der Film optisch beurteilt. Die Ergebnisse sind in Tabelle 5 wiedergegeben.

**Tabelle 5:**

| Filmeigenschaften | | | | | |
|---|---|---|---|---|---|
| | Bsp. 1 | Bsp. 2 | Bsp. 3 | Bsp. 4 | Vergleich |
| Filmreißwerte: Reißdehnung in % | > 1500 | > 1500 | > 1500 | > 1500 | > 1500 |
| Aussehen des Films | klar | klar | klar | klar | trüb |

Fazit: Beispiel und Vergleich besitzen eine gleiche hohe Reißdehnung in %, jedoch ist der Film des erfindungsgemäßen Beispiels klar, während der Vergleichsfilm trüb ist. Dies ist ein weiterer wesentlicher anwendungstechnischer Vorteil.

### Ökologischer Vorteil:

Die Vergleichsdispersion enthält Butenol. Es ist aus toxikologischer Sicht wünschenswert, Produkte zu verwenden, die kein Butenol enthalten. Die erfindungsgemäße Dispersion erreicht und übertrifft die Eigenschaften des Vergleiches, ohne dass Butenol verwendet werden muss. Dies ist aus ökologischer Sicht ein wesentlicher Vorteil gegenüber dem Stand der Technik.

## Patentansprüche

1. Klebstoff, enthaltend:
a) 5,0 bis 95,0 Gew.-% einer Klebstoffdispersion mit einer Viskosität im Bereich von 2000 bis 10000 mPa·s, die
a1) eine wässrige Polymerdispersion, die erhältlich ist durch radikalische, wässrige Emulsionspolymerisation einer Mischung M, umfassend wenigstens 50 Gew.-% mindestens eines ethylenisch ungesättigten Monomers A, ausgewählt unter den Estern der Acrylsäure mit Alkanolen mit 1 bis 12 C-Atomen, Estern der Methacrylsäure mit Alkanolen mit 1 bis 12 C-Atomen und Styrol, zu einem Polymerisat P in Gegenwart mindestens eines Schutzkolloids auf Basis eines in-situ hergestellten wasserlöslichen Präpolymers, welches wenigstens ein wasserlösliches Monomer B umfasst, das ausgewählt ist unter Acrylsäure, Methacrylsäure und Mischungen davon;
a2) gegebenenfalls eine Base, ausgewählt unter Alkalimetallhydroxiden, Ammoniak oder flüchtigen, organischen Aminen,
a3) gegebenenfalls ein vollständig wassermischbares, organisches Lösungsmittel,
sowie gegebenenfalls weitere Zusatzstoffe enthält;
b) 0 bis 90,0 Gew.-% eines Polysaccharids und/oder eines Proteins und/oder eines Proteinabbauproduktes;
c) 0 bis 95,0 Gew.-% mindestens eines Füllstoffes;
d) 0 bis 10,0 Gew.-% mindestens eines Emulgators;
e) 0 bis 30,0 Gew.-% weiterer Zusätze;
f) Wasser ad 100 Gew.-%.

2. Klebstoff nach Anspruch 1, wobei die Mischung M 60 bis 99,9 Gew.-%, mindestens eines Monomers A und 0,1 bis 40 Gew.-%, mindestens eines Comonomers C enthält, das ausgewählt ist unter Vinylhalogeniden, Vinylidenhalogeniden, α,β-ethylenisch ungesättigten Nitrilen, C₂-C₆-Monoolefinen, nichtaromatischen Kohlenwasserstoffen mit mindestens zwei olefinischen Doppelbindungen, Hydroxyalkylacrylaten und -methacrylaten, Acrylamid und Methacrylamid sowie deren N-Alkylderivate, olefinisch ungesättigten Ketonen oder Aldehyden, 5 und/oder deren Mischungen.

3. Klebstoff nach einem der Ansprüche 1 oder 2, wobei das Präpolymer 0,2 bis 5 Gew.-%, bevorzugt 0,3 bis 1,5 Gew.-%, insbesondere 0,5 bis 1,1 Gew.-% mindestens eines Monomers B, bezogen auf die Gesamtmenge der zu polymerisierenden Monomere der Mischung M und des Präpolymers, einpolymerisiert enthält.

4. Klebstoff nach Anspruch 3, wobei das Präpolymer zusätzlich 3,5 bis 6,5 Gew.-%, bevorzugt 4,0 bis 6,0 Gew.-%, mindestens eines Monomers A und/oder C, bezogen auf die Gesamtmenge der zu polymerisierenden Monomere der Mischung M und des Präpolymers, einpolymerisiert enthält.

5. Klebstoff nach einem der vorhergehenden Ansprüche, wobei das Monomer A ausgewählt ist unter Estern der Acrylsäure und/oder Methacrylsäure mit Methanol, Ethanol, n-Propanol, Isopropanol, n-Butanol, Isobutanol oder 2-Ethylhexanol und Styrol.

6. Klebstoff nach einem der vorhergehenden Ansprüche, wobei das Monomer A ausgewählt ist unter Methylacrylat, Ethylacrylat, n-Butylacrylat, 2-Ethylhexylacrylat, Methylmethacrylat und deren Mischungen.

7. Klebstoff nach einem der vorhergehenden Ansprüche, wobei die Glasübergangstemperatur des Polymerisats ≤ 15 °C, bevorzugt ≤ 10 °C, ist.

8. Klebstoff nach einem der vorhergehenden Ansprüche, wobei das Gewichtsverhältnis von Monomer B zu Komponente a2) 3,5:1 bis 7:1, bevorzugt 4:1 bis 6,5:1, beträgt.

9. Verwendung von Klebstoffen nach einem der Ansprüche 1 bis 8 zur Herstellung von Verpackungen aus Papier, Pappe oder Karton oder zur Etikettierung nichtsaugender Substrate, bevorzugt Glas, Metall und Kunststoffe, insbesondere zur Herstellung oder Etikettierung von Verpackungen für Lebensmittel.

10. Verfahren zur Herstellung eines Klebstoffs gemäß einem der Ansprüche 1 bis 8, **dadurch gekennzeichnet, dass** man:
i) in einem Reaktor wenigstens ein wasserlösliches, vorzugsweise säuregruppenhaltiges Monomer B, ausgewählt unter Acrylsäure und Methacrylsäure sowie gegebenenfalls weitere Monomere, ausgewählt unter den zuvor genannten Monomeren A und/oder C, gegebenenfalls in Gegenwart der Komponenten a2) und/oder a3) und/oder weiterer Zusatzstoffe, zu einem Präpolymer umsetzt, und ohne Isolierung des Präpolymers
ii) die Mischung M in Gegenwart des Präpolymers sowie gegebenenfalls der Komponenten a2) und/oder a3) und/oder weiterer Zusatzstoffe nach der Methode der radikalischen, wässrigen Emulsionspolymerisation zu einem Polymerisat P umsetzt,
iii) gegebenenfalls mindestens eine weitere Komponente, ausgewählt unter a2), a3), b), c), d), e), f), und Mischungen davon, zugibt.

## Claims

1. An adhesive comprising:
a) from 5.0 to 95.0% by weight of an adhesive dispersion having a viscosity in the range from 2000 to 10,000 mPa·s, which comprises
a1) an aqueous polymer dispersion which is obtainable by free-radical aqueous emulsion polymerization of a mixture M which comprises at least 50% by weight of at least one ethylenically unsaturated monomer A selected from the esters of acrylic acid with alkanols having 1 to 12 carbon atoms, esters of methacrylic acid with alkanols having 1 to 12 carbon atoms, and styrene, to give a polymer P in the presence of at least one protective colloid based on a water-soluble prepolymer prepared in situ which comprises at least one water-soluble monomer B selected from acrylic acid, methacrylic acid, and mixtures thereof;
a2) if desired, a base selected from the group consisting of alkali metal hydroxides, ammonia, and volatile organic amines,
a3) if desired, a completely water-miscible organic solvent,
and, if desired, further
b) from 0 to 90.0% by weight of a polysaccharide and/or a protein and/or a protein degradation product;
c) from 0 to 95.0% by weight of at least one filler;
d) from 0 to 10.0% by weight of at least one emulsifier;
e) from 0 to 30.0% by weight of further additions;
f) water to 100% by weight.

2. An adhesive as claimed in claim 1, wherein the mixture M contains from 60 to 99.9% by weight of at least one monomer A and from 0.1 to 40% by weight of at least one comonomer C selected from vinyl halides, vinylidene halides, α,β-ethylenically unsaturated nitriles, C₂-C₆ monoolefins, nonaromatic hydrocarbons having at least two olefinic double bonds, hydroxyalkyl acrylates and hydroxyalkyl methacrylates, acrylamide and methacrylamide, and also the N-alkyl derivatives thereof, olefinically unsaturated ketones or aldehydes, and/or mixtures thereof.

3. An adhesive as claimed in either of claims 1 and 2, wherein the prepolymer contains, in copolymerized form, from 0.2 to 5% by weight, preferably from 0.3 to 1.5% by weight and, in particular, from 0.5 to 1.1% by weight of at least one monomer B, based on the overall amount of the monomers of the mixture M and of the prepolymer which are to be polymerized.

4. An adhesive as claimed in claim 3, wherein the prepolymer additionally contains, in copolymerized form, from 3.5 to 6.5% by weight, preferably from 4.0 to 6.0% by weight, of at least one monomer A and/or C, based on the overall amount of the monomers of the mixture M and of the prepolymer which are to be polymerized.

5. An adhesive as claimed in any of the preceding claims, wherein the monomer A is selected from esters of acrylic acid and/or methacrylic acid with methanol, ethanol, n-propanol, isopropanol, n-butanol, isobutanol or 2-ethylhexanol, and styrene.

6. An adhesive as claimed in any of the preceding claims, wherein the monomer A is selected from methyl acrylate, ethyl acrylate, n-butyl acrylate, 2-ethylhexyl acrylate, methyl methacrylate, and mixtures thereof.

7. An adhesive as claimed in any of the preceding claims, wherein the glass transition temperature of the polymer is ≤ 15°C, preferably ≤ 10°C.

8. An adhesive as claimed in any of the preceding claims, wherein the weight ratio of monomer B to component a2) is from 3.5:1 to 7:1, preferably from 4:1 to 6.5:1.

9. The use of an adhesive as claimed in any of claims 1 to 8 for producing packaging made from paper, board or card or for labeling nonabsorbent substrates, preferably glass, metal and plastics, especially for producing or labeling packaging for foodstuffs.

10. A process for preparing an adhesive as claimed in any of claims 1 to 8, which comprises:
i) reacting, in a reactor, at least one water-soluble monomer B which preferably contains acid groups, selected from acrylic acid and methacrylic acid and, if desired, further monomers, selected from the aforementioned monomers A and/or C, in the presence or absence of components a2) and/or a3) and/or of further additives, to give a prepolymer, and, without isolating the prepolymer,
ii) reacting the mixture M in the presence of the prepolymer and in the presence or absence of components a2) and/or a3) and/or of further additives by the method of free-radical aqueous emulsion polymerization, to give a polymer P,
iii) and, if desired, adding at least one further component selected from a2), a3), b), c), d), e), f) and mixtures thereof.

## Revendications

1. Substance adhésive contenant :
a) une dispersion adhésive, à raison de 5,0% à 95,0% en poids, présentant une viscosité allant de 2 000 à 10 000 mPa·s, qui contient
a1) une dispersion aqueuse de polymère que l'on peut obtenir au moyen d'une polymérisation en émulsion aqueuse par voie radicalaire d'un mélange M comprenant au moins 50% en poids d'au moins un monomère A à insaturation éthylénique choisi parmi les esters de l'acide acrylique avec des alcanols possédant 1 à 12 atomes de C, les esters de l'acide méthacrylique avec des alcanols possédant 1 à 12 atomes de C et du styrène, pour obtenir un polymère P, en présence d'au moins un colloïde protecteur à base d'un prépolymère hydrosoluble préparé *in situ* et qui comprend au moins un monomère B hydrosoluble choisi parmi l'acide acrylique, l'acide méthacrylique et leurs mélanges,
a2) éventuellement une base choisie parmi les hydroxydes de métal alcalin, l'ammoniac ou les amines organiques volatiles,
a3) éventuellement un solvant organique entièrement miscible à l'eau,
ainsi qu'éventuellement d'autres adjuvants;
b) un polysaccharide et/ou une protéine et/ou un produit de dégradation d'une protéine, à raison de 0% à 90,0% en poids;
c) au moins une charge, à raison de 0% à 95,0% en poids;
d) au moins un émulsifiant, à raison de 0% à 10,0% en poids;
e) d'autres additifs, à raison de 0% à 30,0% en poids;
f) le complément d'eau pour atteindre 100% en poids.

2. Substance adhésive selon la revendication 1, dans laquelle le mélange M contient au moins un monomère A, à raison de 60% à 99,9% en poids, et au moins un comonomère C, à raison de 0,1% à 40% en poids, choisi parmi les halogénures de vinyle, les halogénures de vinylidène, les nitriles à insaturation α,β-éthylénique, les monooléfines en C₂ à C₆, les hydrocarbures non aromatiques possédant au moins deux doubles liaisons oléfiniques, les acrylates et les méthacrylates d'hydroxyalkyle, l'acrylamide et le méthacrylamide ainsi que leurs dérivés N-alkyle, les aldéhydes et les cétones à insaturation oléfinique et/ou leurs mélanges.

3. Substance adhésive selon l'une quelconque des revendications 1 ou 2, dans laquelle le prépolymère contient, sous forme polymérisée, au moins un monomère B à raison de 0,2% à 5% en poids, de préférence de 0,3% à 1,5% en poids, en particulier de 0,5% à 1,1% en poids, par rapport à la quantité totale des monomères du mélange M à polymériser et du prépolymère.

4. Substance adhésive selon la revendication 3, dans laquelle le prépolymère contient en plus, sous forme polymérisée, au moins un monomère A et/ou C, à raison de 3,5% à 6,5% en poids, de préférence de 4,0% à 6,0% en poids, par rapport à la quantité totale des monomères du mélange M à polymériser et du prépolymère.

5. Substance adhésive selon l'une quelconque des revendications précédentes, dans laquelle le monomère A est choisi parmi les esters de l'acide acrylique et/ou de l'acide méthacrylique avec du méthanol, de l'éthanol, du n-propanol, de l'isopropanol, du n-butanol, de l'isobutanol ou du 2-éthylhexanol et du styrène.

6. Substance adhésive selon l'une quelconque des revendications précédentes, dans laquelle le monomère A est choisi parmi l'acrylate de méthyle, l'acrylate d'éthyle, l'acrylate de n-butyle, l'acrylate de 2-éthylhexyle, le méthacrylate de méthyle et leurs mélanges.

7. Substance adhésive selon l'une quelconque des revendications précédentes, dans laquelle la température de transition vitreuse du polymère est ≤ 15°C, de préférence est ≤10°C.

8. Substance adhésive selon l'une quelconque des revendications précédentes, dans laquelle le rapport pondéral du monomère B au composant a2) va de 3,5:1 à 7:1, de préférence de 4:1 à 6,5:1.

9. Mise en oeuvre de substances adhésives selon l'une quelconque des revendications 1 à 8, pour la fabrication d'emballages de papier, de carton-pâte ou de carton, ou pour l'étiquetage de substrats non absorbants, de préférence de verre, de métal et de matières plastiques, en particulier pour la fabrication ou l'étiquetage d'emballages destinés à des produits alimentaires.

10. Procédé pour la préparation de substances adhésives selon l'une quelconque des revendications 1 à 8, **caractérisé en ce que**
i) l'on fait réagir, dans un réacteur, au moins un monomère B, hydrosoluble et contenant, de préférence, des groupes acide, choisi parmi l'acide acrylique et l'acide méthacrylique, ainsi qu'éventuellement d'autres monomères choisis parmi les monomères A et/ou C susmentionnés, éventuellement en présence des composants a2) et/ou a3) et/ou d'autres adjuvants, pour obtenir un prépolymère, et, sans isoler le prépolymère,
ii) on fait réagir le mélange M, en présence du prépolymère ainsi qu'éventuellement des composants a2) et/ou a3) et/ou d'autres adjuvants, selon le procédé de polymérisation en émulsion aqueuse par voie radicalaire, pour obtenir un polymère P,
iii) on ajoute éventuellement au moins un composant supplémentaire choisi parmi a2), a3), b), c), d), e), f) et leurs mélanges.
